## Europäisches Patentamt

## European Patent Office

## Office européen des brevets

(19)

(11) Veröffentlichungsnummer: **0 222 108**
**B1**

(12) **EUROPÄISCHE PATENTSCHRIFT**

(45) Veröffentlichungstag der Patentschrift:
**05.12.90**

(21) Anmeldenummer: **86112723.1**

(22) Anmeldetag: **15.09.86**

(51) Int. Cl.⁵: **F16H 47/04**

(54) Stufenloses hydromechanisches Verzweigungsgetriebe, insbesondere für Kraftfahrzeuge.

(30) Priorität: **18.09.85 DE 3533191**
**01.07.86 DE 3622045**

(43) Veröffentlichungstag der Anmeldung:
**20.05.87 Patentblatt 87/21**

(45) Bekanntmachung des Hinweises auf die Patenterteilung:
**05.12.90 Patentblatt 90/49**

(84) Benannte Vertragsstaaten:
**FR GB IT SE**

(56) Entgegenhaltungen:
**EP-A- 0 081 696**
**DE-A- 2 716 960**
**DE-A- 2 757 191**
**DE-A- 2 757 300**
**DE-A- 2 758 659**
**DE-A- 2 854 375**

(73) Patentinhaber: **Meyerle, Michael, Kiefernweg 9,**
**D-7996 Meckenbeuren-Lochbrücke(DE)**

(72) Erfinder: **Meyerle, Michael, Kiefernweg 9,**
**D-7996 Meckenbeuren-Lochbrücke(DE)**

(74) Vertreter: **Münich, Wilhelm, Dr. et al, Kanzlei Münich,**
**Steinmann, Schiller Willibaldstrasse 36/38,**
**D-8000 München 21(DE)**

ACTORUM AG

**Beschreibung**

Die Erfindung bezieht sich auf ein stufenloses hydrostatisch-mechanisches Verzweigungsgetriebe für Kraftfahrzeuge nach dem Oberbegriff des Anspruchs 1. Ein solches hydrostatisch-mechanisches Getriebe mit Leistungsverzweigung und mit einem vierwelligen Summierungsplaneten-Getriebe ist aus der EP-A 081 696 bekannt.

Die noch bestehenden Probleme bei Anwendung des Hydrostaten im Kraftfahrzeug, insbesondere für den anspruchsvollen Personenverkehr, liegen im unbefriedigenden Wirkungsgrad und im Geräuschverhalten begründet.

Der Erfindung liegt die Aufgabe zugrunde, das bekannte Getriebe zu verbessern, insbesondere ein stufenloses hydrostatisch-mechanisches Verzweigungsgetriebe zu schaffen, das die spezifischen Anforderungen an den Hydrostaten auf ein Mindestmaß senkt, d.h. das den hydrostatischen Leistungsanteil reduziert und die geräusch-, wirkungsgrad- und lebensdauerbestimmenden Parameter, wie Hydrostatdruck, Hydrostatdrehzahlen sowie die Größe dieser Komponenten und deren Anordnung in ein akzeptables und technisch machbares Maß bringt. Darüber hinaus soll eine weitgehende Anpassungsfähigkeit an verschiedene fahrzeugspezifische Bedingungen erfüllbar sein. Das Drehzahlniveau soll so liegen, daß sich eine abtriebsseitige Übersetzungsanpassung durch zusätzliche Übersetzungsstufen möglichst erübrigt. Es soll neben hoher Wirtschaftlichkeit im Betrieb, also durch Verbrauchseinsparung durch Ausnutzung der Verbrauchsbestwerte des Motors etc., ein hoher Wirtschaftlichkeitsgrad, auch durch eine risikofreie rationale Fertigung, erzielt werden. Des weiteren sollen eine montage- und servicefreundliche Modulbauweise realisierbar und kompakte, fahrzeugfreundliche Gesamtkonstruktionen möglich sein.

Die Aufgabe wird durch die im Anspruch 1 aufgeführten Merkmale gelöst. Weitere, vorteilhafte Ausgestaltungen der Erfindung gehen aus den Unteransprüchen und der nachfolgenden Beschreibung hervor.

Die Erfindung wird an Ausführungsbeispielen anhand von Zeichnungen erläutert. Es zeigen

Fig. 1 ein erstes Ausführungsbeispiel, schematisch,

Fig. 1a ein zweites Ausführungsbeispiel, schematisch,

Fig. 2 einen Drehzahlplan des ersten und zweiten Ausführungsbeispiels, jeweils mit Sekundärregelung,

Fig. 3 einen Drehzahlplan des ersten und zweiten Ausführungsbeispiels ohne Sekundärregelung,

Fig. 4 ein drittes Ausführungsbeispiel, schematisch,

Fig. 5 einen Drehzahlplan des dritten Ausführungsbeispiels gemäß Figur 4,

Fig. 6 ein viertes Ausführungsbeispiel, schematisch,

Fig. 7 einen Drehzahlplan des vierten Ausführungsbeispiels mit Drehzahlspreizung gemäß Figur 6,

Fig. 8 einen Drehzahlplan des vierten Ausführungsbeispiels ohne Drehzahlspreizung gemäß Figur 6,

Fig. 9 ein fünftes Ausführungsbeispiel mit drei Vorwärtsfahrbereichen und integriertem Rückwärtsfahrbereich, schematisch,

Fig. 10 einen Drehzahlplan des Ausführungsbeispiels gemäß Figur 9,

Fig. 11 ein sechstes Ausführungsbeispiel mit drei Vorwärtsfahrbereichen mit Drehzahlspreizung und separatem hydrostatischem Rückwärtsfahrbereich, schematisch,

Fig. 12 einen Drehzahlplan für das Ausführungsbeispiel gemäß Fig. 11,

Fig. 13 ein siebentes Ausführungsbeispiel mit drei Vorwärtsfahrbereichen und separatem, hydromechanischem Rückwärtsfahrbereich, schematisch,

Fig. 14 einen Drehzahlplan für das Ausführungsbeispiel gemäß Figur 13,

Fig. 15 einen Drehzahlplan für das Ausführungsbeispiel gemäß Figur 13, mit Drehzahlspreizung im ersten Vorwärtsfahrbereich und im ersten Rückwärtsfahrbereich,

Fig. 16 ein achtes Ausführungsbeispiel mit zwei Vorwärtsfahrbereichen und einem separaten hydromechanischen Rück- und Vorwärtsfahrbereich zur Verwendung in Schwerkraftfahrzeugen,

Fig. 17 ein neuntes Ausführungsbeispiel mit drei Vorwärtsfahrbereichen und einem separaten hydromechanischen Rückwärtsfahrbereich, für Schwerfahrzeuge, insbesondere für Raupenfahrzeuge,

Fig. 18 ein zehntes Ausführungsbeispiel mit drei Vorwärtsfahrbereichen und drei hydromechanischen Rückwärtsfahrbereichen, für Schwerfahrzeuge.

Fig. 19 ein anderes Ausführungsbeispiel einer Getriebeausführung, schematisch, mit kompaktem Kupplungspaket,

Fig. 20 ein weiteres Ausführungsbeispiel des Getriebes mit ineinandergreifenden Planetenrädern des ersten Summierungsplanetengetriebes,

Fig. 21 ein anderes Ausführungsbeispiel des Getriebes in einer weiteren Ausführungsform des Summierungsplanetengetriebes,

Fig. 22 ein weiteres Ausführungsbeispiel des Getriebes mit einer vierten Ausführungsmöglichkeit des Summierungsplanetengetriebes,

Fig. 23 ein weiteres Ausführungsbeispiel des Getriebes mitaufgeteilter, zweiter Summierungsplanetengetriebeeinheit.

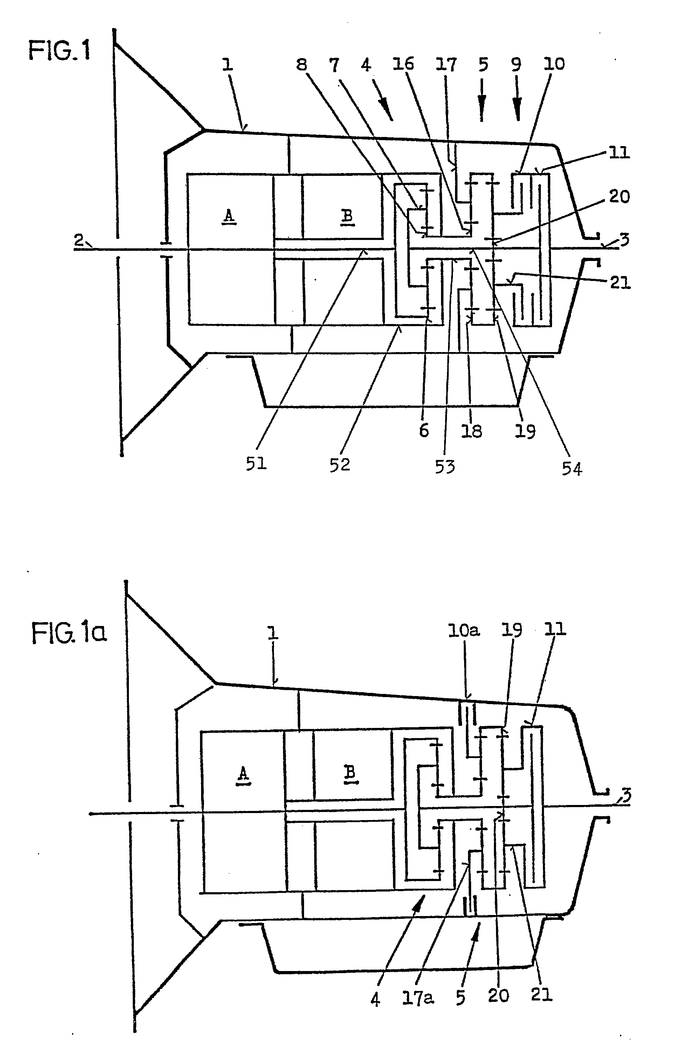

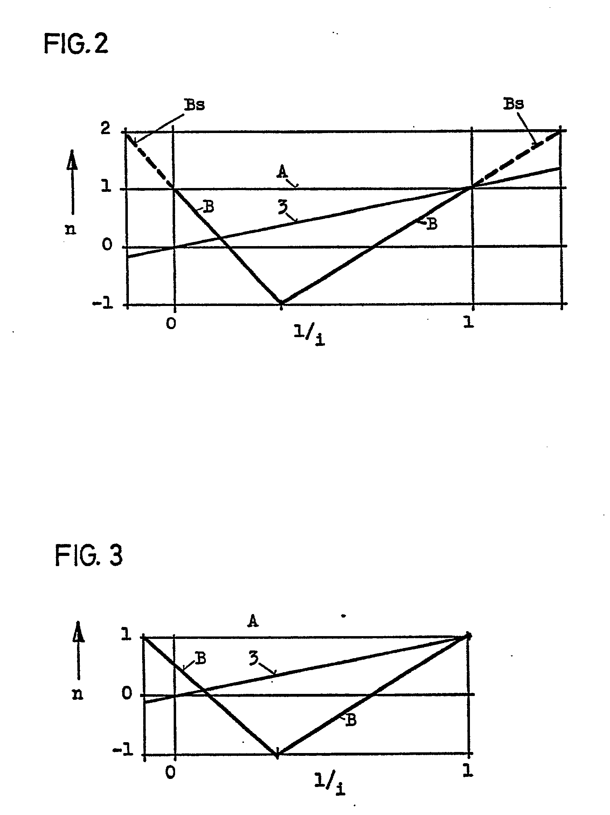

Durch eine Kombination eines ersten Summierungsplanetengetriebes 4 (Fig. 1) mit einem zweiten Summierungsplanetengetriebe (5) wird erreicht, daß die Drehzahl einer zweiten Hydrostateinheit B im Anfahrbereich des Fahrzeugs gleichsinnig (Fig. 2, 3) mit der Antriebsdrehzahl ist. Die beiden Summierungsplanetengetriebe 4, 5 haben am Ende des ersten Schaltbereichs gegenläufige Drehrichtungen.

Nach Umschaltung in den zweiten Fahrbereich wird die Drehzahl der Hydrostateinheit B wieder zurückgeführt, bis die Drehzahl einer Antriebswelle 2 erreicht ist. An diesem Punkt drehen alle Glieder des ersten Summierungsplanetengetriebes 4 sowie beide Hydrostateinheiten A, B und die Antriebswelle 2 gleichsinnig mit gleicher Drehzahl, also im Synchronlauf. Am Ende des zweiten Schaltbereichs ist die Übersetzung der Antriebswelle zur Abtriebswelle gleich 1. Ist die zweite Hydrostateinheit B als Verstelleinheit ausgebildet, kann durch sekundäre Verstellung die Abtriebszahl weiter erhöht werden, was für viele Anwendungsfälle zur Schaffung eines zusätzlichen Overdrivebereiches von Vorteil ist. Die Drehzahl der Abtriebswelle 3 ist hier noch verhältnismäßig niedrig, so daß die üblichen Übersetzungen der Kraftfahrzeuge verwendet werden können.

Durch die Sekundärregelung (Fig. 2) kann der Rückwärtsfahrbereich ohne zusätzliche Kupplung oder sonstige Übersetzungsglieder realisiert werden. Der Aufbau des Getriebes ist relativ einfach. Alle Bauteile sind mit konventionellen Fertigungsmethoden herstellbar, und die Baugruppen, der Summierungsplanetengetriebe 4, 5 und das Kupplungspaket lassen sich auf einfache Art zu einer Baueinheit bzw. Montageeinheit kombinieren. Die Übersetzungen (Fig. 3) in den beiden Summierungsplanetengetrieben 4, 5 sind so ausgelegt, daß die Hydrostateinheit A im Anfahrpunkt noch nicht auf ihre maximale Endstellung ausgeschwenkt ist, sondern auf etwa 60 % ihrer Maximalverstellung. Bei Ausschwenkung der Hydrostateinheit A auf maximale Endverstellung ab diesem Punkt bekommt die Abtriebswelle 3 negative Drehzahl für Rückfahrgeschwindigkeit. Bei diesem Ausführungsbeispiel ist keine Sekundärverstellung erforderlich.

Bei einem anderen Ausführungsbeispiel (Fig. 1a) dient anstelle der Kupplung 10 (erste Bereichskupplung) eine Bremse 10a zum Festhalten des Stegs 17a als erste Bereichsschaltung. Die Antriebswelle 2 ist in diesem Fall unmittelbar mit dem Steg 21 der aus einem Hohlrad 19 und einem Sonnenrad 20 bestehenden Planetenstufe des zweiten Summierungsplanetengetriebes 5 verbunden. Am Ende des zweiten Schaltbereichs laufen hier alle Glieder des ersten Summierungsplanetengetriebes 4 und des zweiten Summierungsplanetengetriebes 5, der Kupplung 11 einschließlich der Antriebswelle 2 und beide Hydrostateinheiten A, B um. Durch den Wegfall der Relativdrehzahlen in diesem Bereich sind auch Wälzleistung und somit ebenfalls der Getriebewirkungsgrad sehr günstig. Durch die allgemein niedrigen Relativdrehzahlen im zweiten Bereich, der bei Anwendung auf einen PKW über 80 % Betriebsanteil hat, kann die Wälz- und Verlustleistung niedrig gehalten werden. Hierdurch bietet sich vor allem an, die Sekundärregelung des Hydrostatgetriebes A, B (siehe Drehzahllinie Bs) zugunsten eines großen Overdrivebereiches zu nutzen (Fig. 2), zumal dadurch auch gleichzeitig noch der Rückwärtsfahrbereich sehr kostengünstig realisiert werden kann.

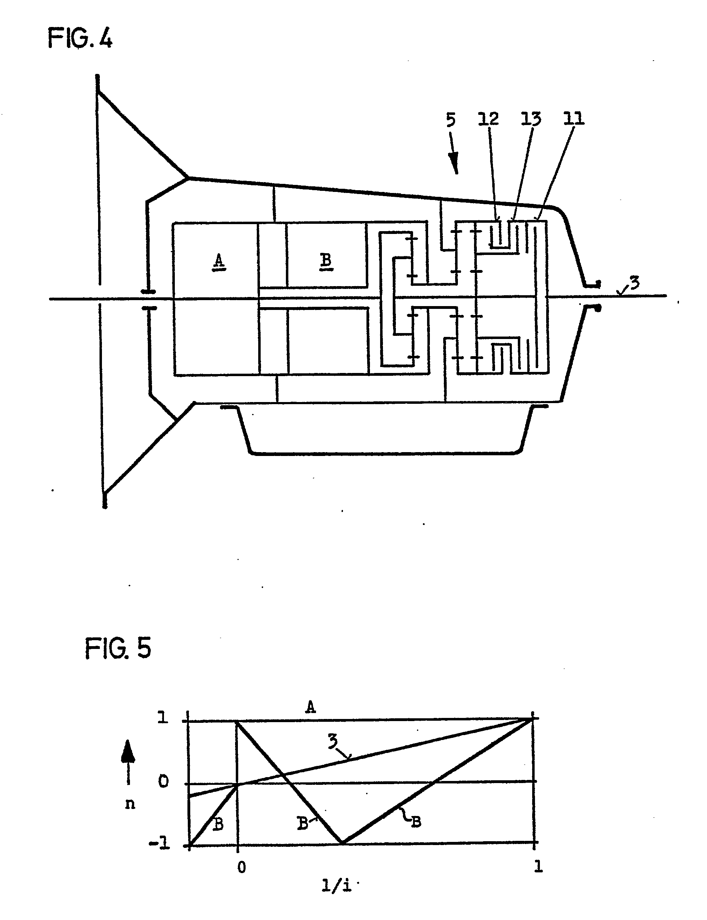

Ein Ausführungsbeispiel gemäß Fig. 4 unterscheidet sich von demjenigen nach Figur 1 dadurch, daß eine zusätzliche Kupplung 12 für den Rückwärtsfahrbereich vorgesehen ist. Es wird hier eine unmittelbare Verbindung über die beiden Hohlräder des Summierungsplanetengetriebes 4 zur zweiten Hydrostateinheit B geschaffen, wodurch eine rein hydrostatische Übertragung im Rückwärtsfahrbereich bei geschlossener Kupplung 12 hergestellt wird. Bei diesem Ausführungsbeispiel kann der volle Verstellbereich des Hydrostatgetriebes im ersten Schaltbereich zugunsten einer höheren Leistungskapazität gegenüber dem Ausführungsbeispiel gemäß Drehzahlplan in Figur 3 ausgenutzt werden, bei der der Rückwärtsfahrbereich im ersten Schaltbereich mit integriert ist (Fig. 5).

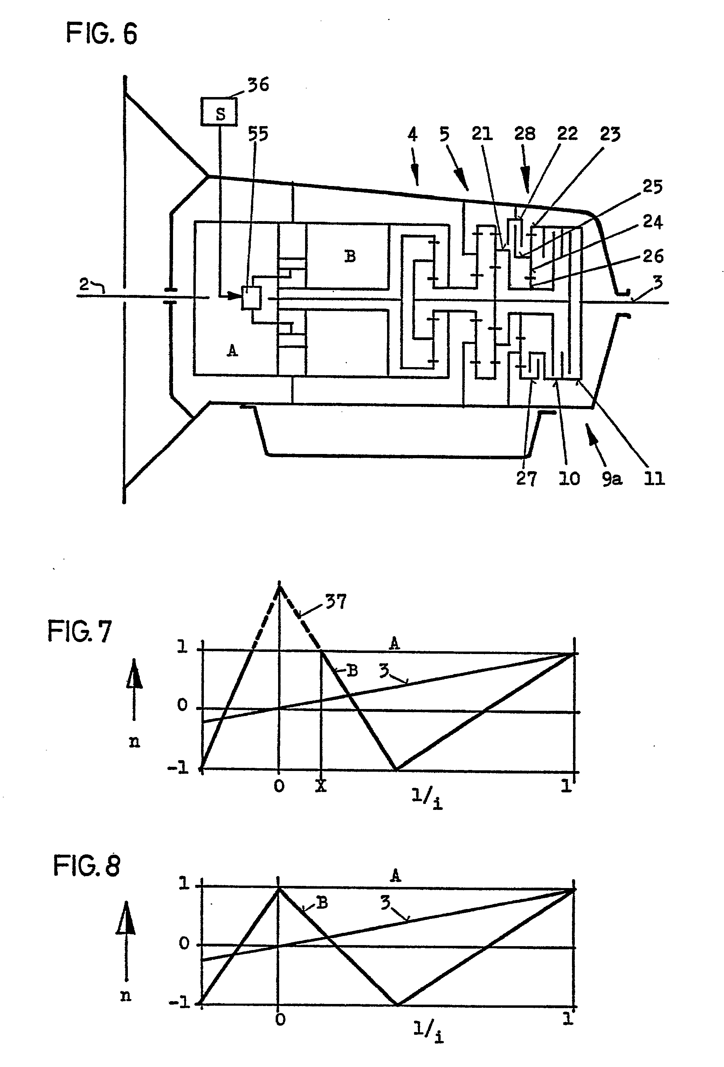

Ein Ausführungsbeispiel gemäß Figur 6 weist einen separaten Rückwärtsschaltbereich durch den Zusatz eines weiteren Planetengetriebes 28 und einer Kupplung 27 bzw. Bremse 22 auf. Bei diesem Ausführungsbeispiel ist somit ein großer Rückwärtsfahrbereich möglich, wie man ihn allgemein bei PKW gewohnt ist. Diese Getriebekombination ist insbesondere bei Anwendung in Nutzkraftfahrzeugen oder Bussen oder auch bei Arbeitsmaschinen sehr zweckmäßig. Gegenüber vorgenannten Ausführungsbeispielen bietet sich hier die weitere Möglichkeit an, die Leistungskapazität des Getriebes weiter auszubauen, und zwar durch Spreizung des Drehzahlbereichs der zweiten Hydrostateinheit B. Das bedeutet, daß im Anfahrbereich die Drehzahl der zweiten Hydrostateinheit B gegenüber der ersten Hydrostateinheit A und somit der Antriebswelle 2 verhältnismäßig wesentlich höher ausgelegt werden kann, was zur Steigerung der Anfahrzugkräfte dient bzw. den Drehmomentwandlungsbereich des gesamten Getriebes erhöht. Dies kann dadurch realisiert werden, daß die Übersetzung im zweiten Summierungsplanetengetriebe 5 entsprechend dem gewünschten Spreizungsbereich angepaßt wird, wodurch man bewirkt, daß über das Summierungsplanetengetriebe im Anfahrzustand die zweite Hydrostateinheit B mit einer Drehzahl angetrieben wird, die höher als die der ersten Hydrostateinheit A liegt. Bei gleichgroßen Förder- bzw. Schluckvoluminas der Hydrostateinheit A zur Hydrostateinheit B bedeutet dies, daß eine Mehrförderung der Hydrostateinheit B gegeben ist, die durch eine Zusatzeinrichtung, z.B. über ein Bypaßventil 55 im Anfahrzustand zum Ausgleich auf die Niederdruckseite des Hydrostatkreislaufes gefördert wird. Die Anfahrregelung wird dadurch erreicht, daß das Bypaßventil 55 ein Signal 36 erhält, das entweder ein Drehzahlsignal oder/und ein Signal aus der Bremsbetätigung oder/und ein Lastsignal sein kann.

Aus dem dem Ausführungsbeispiel nach Figur 6 zugeordneten Drehzahlplan (Fig. 7) ist die Drehzahlspreizung der Hydrostateinheit B durch eine unterbrochene Linie 37 dargestellt. Bei diesem Ausführungsbeispiel beträgt das maximale Drehzahlverhältnis Hydrostateinheit B zu Hydrostateinheit A 1:2. Die Funktion des Bypaßventils 55 ersetzt hier die Funktion einer Anfahrkupplung, wie dies bei einem anderen, aufwendigen Getriebe dieser Art bekannt ist.

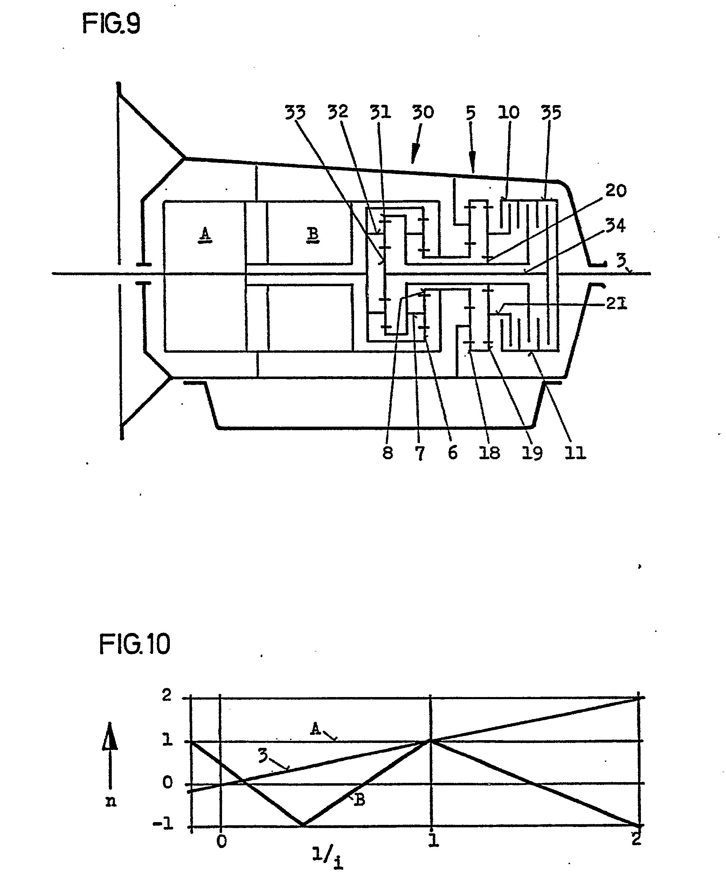

Anhand der Figur 9 wird ein weiteres Ausführungsbeispiel eines Getriebes mit drei Vorwärtsschaltbereichen beschrieben, wobei der Rückwärtsbereich im ersten Schaltbereich mitintegriert ist (wie aus dem dazugehörigen Drehzahlplan Fig. 10 hervorgeht). Die Grundbaueinheiten sind weitgehend mit den voranbeschriebenen Ausführungen identisch. Der Hauptunterschied liegt darin, daß das erste Summierungsplanetengetriebe 30 um einen weiteren, aus einem Hohlrad 31, einem Steg 32 und einem Sonnenrad 33 bestehenden Planetenradsatz erweitert ist. Die vierte Welle bildet hier das Sonnenrad 33, das beim Schalten des dritten Fahrbereichs über eine weitere Kupplung 35 mit der Abtriebswelle 3 verbunden ist. Bei diesem Ausführungsbeispiel ist der Rückwärtsbereich im ersten Schaltbereich mit integriert, wie im dazugehörigen Drehzahlplan (Fig. 10) dargestellt ist, der bei geschlossener Kupplung 10, die gleichzeitig auch für den ersten Fahrbereich dient, geschaltet ist. Der dritte Bereich kann hier durch einen relativ niedrigen Kostenaufwand realisiert werden, wodurch eine Verdoppelung des Drehmomentwandlungsbereichs, d.h. eine Verdoppelung der Leistungsfähigkeit des gesamten Getriebes erreicht wird. Die Abtriebsdrehzahl steigt bei diesem Ausführungsbeispiel um das Doppelte gegenüber der Antriebsdrehzahl an. Unter Berücksichtigung des von heutigen Brennkraftmaschinen angebotenen Einsparungspotentials sollte ein Overdrivebereich von etwa der doppelten Größe des Übersetzungsbereichs gewählt werden. Dies bedeutet, daß diese Getriebeausführung unter Beibehaltung der üblichen Achsübersetzung ideale Voraussetzungen bietet, um das angebotene Verbrauchseinsparungspotential, z.B. im PKW-Bereich voll ausschöpfen zu können. Diese Getriebeausführung zeichnet sich also durch einen sehr großen Wandlerbereich und somit ausreichenden Overdrivebereich bei gleichzeitig sehr kleinen Hydrostateinheiten aus, was den zusätzlichen Vorteil eines besonders günstigen Getriebewirkungsgrades und geringer spezifischer Belastung der Hydrostateinheiten gewährleistet. Auch den Geräuschproblemen wirkt dieses Ausführungsbeispiel entgegen.

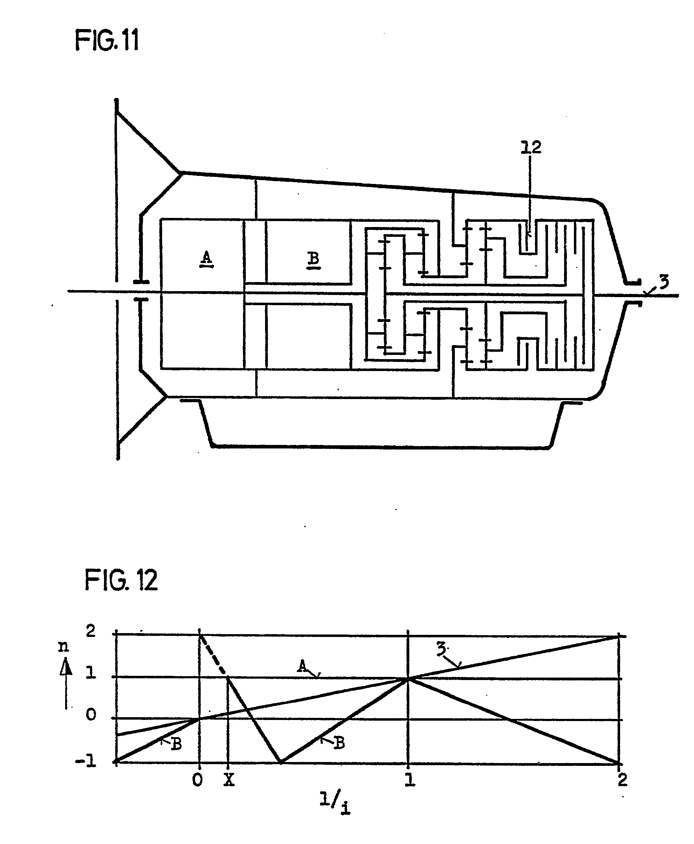

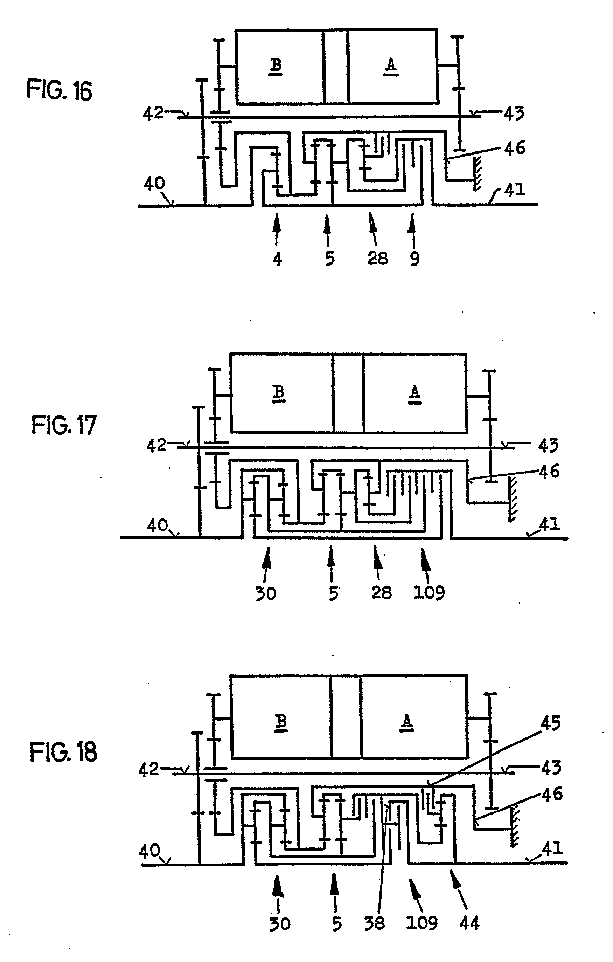

Werden höhere Rückfahrgeschwindigkeiten gefordert, kann die beschriebene Getriebeausführung gemäß einem weiteren Ausführungsbeispiel nach Figur 11 durch eine zusätzliche Kupplung für den Rückwärtsbereich, der rein hyrdostatisch wie bei der Ausführung nach Figur 4 über die Kupplung 12 geschaltet wird, erweitert werden. Bei diesem Ausführungsbeispiel kann der erste Fahrbereich mit Drehzahlspreizung der zweiten Hydrostateinheit B ähnlich dem Ausführungsbeispiel nach Figur 6 und nach Drehzahlplan Figur 7 zugunsten eines noch größeren Wandlungsbereichs entsprechend der hohen PKW-Leistungsklassen oder auch bei Anwendung in Nutzkraftfahrzeugen, Bussen oder Arbeitsmaschinen ausgeführt werden (Fig. 17, 18).

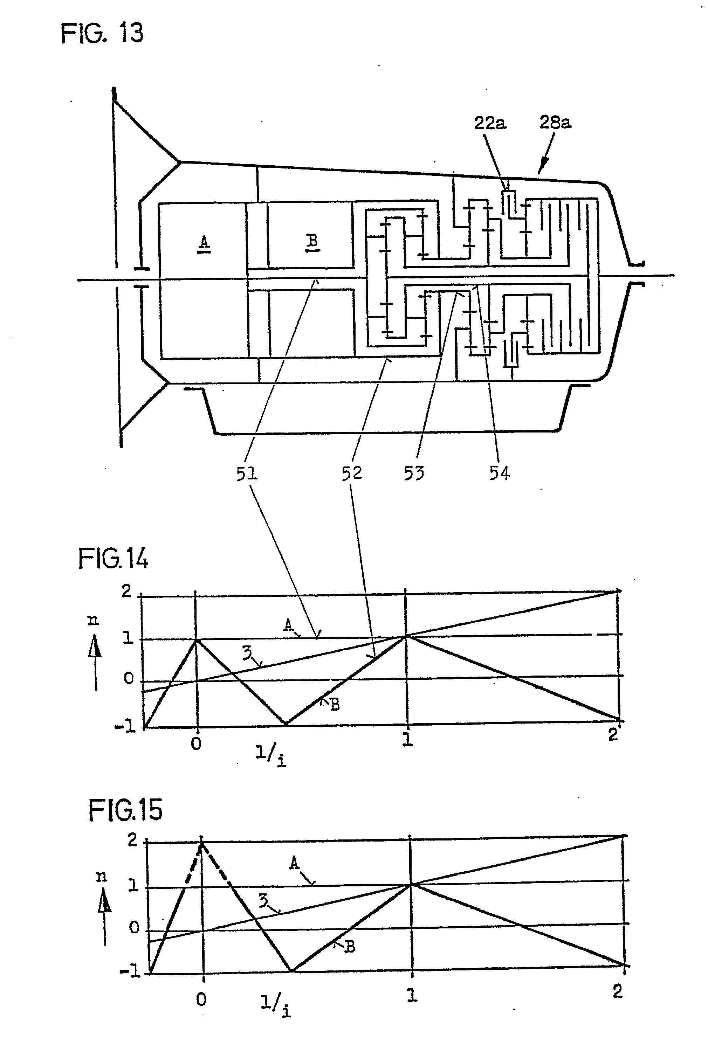

Besonders hohen Ansprüchen sowohl hinsichtlich der Leistungskapazität, der Fahrleistung wie des gesamten Fahrkomforts entspricht ein weiteres Ausführungsbeispiel gemäß Figur 13. Diese bietet drei Vorwärtsfahrbereiche und einen separaten leistungsverzweigten Rückwärtsfahrbereich, der in seiner Größe beliebig durch entsprechende Übersetzungsanpassung eines weiteren Planetensatzes und der Bereichsschaltung über eine Bremse 22a angepaßt werden kann. Der erste Fahrbereich ist ebenfalls mit einer Bereichsspreizung zugunsten eines großen Wandlungsbereichs ausführbar, der auch für den Rückwärtsbereich gilt. Die Größe der Rückfahrgeschwindigkeit kann durch eine Übersetzungsanpassung eines Planetengetriebes 28a den Erfordernissen angeglichen werden, was auch aus den dazugehörigen Drehzahlplänen (14, 15) hervorgeht.

Ein weiteres Ausführungsbeispiel nach Figur 16 ist hinsichtlich seiner Grundbaueinheiten identisch mit dem Ausführungsbeispiel nach Figur 6. Es unterscheidet sich lediglich in der Anordnung der Hydrostateinheiten A, B, die hier zu den Bauelementen der Verzweigungsgetriebeeinheiten, also den Summierungsplantengetrieben 4, 5, dem Planetengetriebe 28 und der Kupplung 9 versetzt angeordnet sind, insbesondere im Hinblick auf Einbaubedingungen, wie sie bei Nutzkraftfahrzeugen, Bussen oder Arbeitsmaschinen gefordert werden. Der Antriebsmotor kann bei diesem Ausführungsbeispiel an verschiedenen Stellen angeschlossen werden. Hierzu stehen Antriebswellen 40, 42 und der Antriebsanschluß 43 zur Verfügung, was bei den geforderten vielfältigen Einbaubedingungen der Kraftfahrzeuge besonders vorteilhaft ist.

Ein anderes Ausführungsbeispiel (Fig. 17) entspricht im wesentlichen den Einbaubedingungen von Schwerkraftfahrzeugen, wie Bussen, Nutzkraftfahrzeugen, Arbeitsmaschinen und insbesondere Schleppern und besitzt drei Vorwärtsfahrbereiche und einen separaten Rückwärtsfahrbereich mit Leistungsverzweigung. Dieses Ausführungsbeispiel hat insbesondere für die Anwendung in Bussen besondere Vorteile hinsichtlich einer Kraftstoffeinsparung, Umweltfreundlichkeit und einem Fahrkomfort. Der dritte Bereich kann nahezu vollständig als Overdrivebereich für die Kraftstoffeinsparung genutzt werden.

Für Fahrzeuge mit hoher Rückfahrgeschwindigkeit bietet ein weiteres Ausführungsbeispiel (Fig. 18) drei Vorwärtsfahrbereiche und drei Rückwärtsfahrbereiche, wobei der Rückwärtsfahrbereich in der Gesamtgeschwindigkeit durch ein zusätzliches Planetenwendegetriebe 44 beliebig angepaßt werden kann. Dieses Ausführungsbeispiel ist besonders für Arbeitsmaschinen, wie Planierraupen oder beliebige Kettenfahrzeuge von Vorteil. Die Gesamtcharakteristik entspricht der Getriebeausführung nach dem Ausführungsbeispiel gemäß Figur 13, wobei der gesamt Vorwärtsfahrbereich durch das Planetenwendegetriebe 44 und eine Kupplung/Bremse 45 umgekehrt wird. Wie auch die Ausführungen gemäß Figuren 16 und 17 bietet auch dieses Ausführungsbeispiel den Vorteil der verschieden Anschlußmöglichkeiten für die Brennkraftmaschine.

Das Verzweigungsgetriebe weist den Vorteil auf, daß alle Bauteile einfach herstell- und montierbar sind, daß also nahezu eine risikofreie Fertigung gewährleistet ist. Ferner ist bei allen Ausführungsbeispielen eine Modulbauweise realisierbar, die hohe Servicefreundlichkeit hat. Die einzelnen Baugruppen, nämlich das erste Summierungsplanetengetriebe, das zweite Summierungsplanetengetriebe, das Kupplungspaket sowie die Zusatzelemente für die Erreichung der Rückfahrgeschwindigkeiten, können zu Einzelbaugruppen zusammengefaßt werden.

Je nach Getriebeausführung können die Einzelbaugruppen ihrerseits zu einer Hauptgruppe zusammengeschlossen werden, wie z.B. bei den Ausführungsbeispielen nach den Figuren 16, 17, 18, bei denen jeweils das zweite Summierungsplanetengetriebe, das Kupplungspaket und die Wendegetriebe- bzw. Rückfahreinrichtung durch ein alle Gruppen übergreifendes Gehäuse 46, 47 zu einem Baustein zusammengefaßt sind, der auf einfache Weise in das Getriebegehäuse eingesetzt und dort fixiert werden kann, wodurch Gehäusebearbeitungen auf ein geringes Maß gesenkt werden können. Ferner kann der Vorteil vielfältiger Varationsmöglichkeiten hinsichtlich eines breiten Anwendungsbereichs ausgeschöpft werden.

Die Antriebswelle 2 (Fig. 1), die ohne Trennkupplung mit der Kurbelwelle des Antriebsmotors verbunden ist, treibt die erste Hydrostateinheit A sowie die erste Welle des Summierungsplantengetriebes 4 unmittelbar an, wobei die Welle bei diesem Ausführungsbeispiel als Hohlrad ausgebildet ist. Ist das Getriebe gemäß Drehzahlplan nach Figur 2 ausgelegt, haben die erste Hydrostateinheit A und die zweite Hydrostateinheit B gleiche Drehzahl und gleiche Drehrichtung, was bedeutet, daß alle Glieder des Summierungsplanetengetriebes 4 Synchronlauf haben. Mit der zweiten Hydrostateinheit B steht eine Welle des ersten Summierungsplanetengetriebes 4 und die erste Welle des zweiten Summierungsplanetengetriebes 5, die beide als Sonnenräder 8, 16 ausgebildet sind, in trieblicher Verbindung. Die hydrostatische Leistung teilt sich dementsprechend auf beide Summierungsplanetengetriebe 4, 5 auf.

Die im ersten Summierungsplanetengetriebe 4 über den Steg 7 aufsummierte Leistung wird im ersten Fahrbereich auf das Sonnenrad 20 der zweiten Summierungsplanetengetriebeeinheit übertragen, wobei gleichzeitig zusätzlich eine Teilleistung über die beiden Hohlräder 18, 19 des zweiten Summierungsplanetengetriebes 5 fließt, die der Summenleistung des Sonnenrads 20 im Steg 21 des zweiten Summierungsplanetengetriebes 5 zusätzlich aufsummiert, und die gemeinsam bei geschlossener Kupplung 10 für den ersten Fahrbereich zur Abtriebswelle 3 weitergeleitet wird. Im Anfahrzustand ist die erste Hydrostateinheit A auf ihre volle Verstellgröße eingeregelt. Wird die Hydrostateinheit A jetzt auf kleiner Verstellwerte eingeregelt, beginnen sich der Steg 21 und damit die Abtriebswelle 3 zu drehen. Bei einer Hydrostatverstellung über die Null-Lage hinaus bis zu der maximal negativen Endverstellung haben alle Glieder der Kupplungen 10, 11 Synchronlauf erreicht, so daß die Umschaltung in den zweiten Bereich durch Schließen der Kupplung 11 und Öffnen der Kupplung 10 erfolgen kann. Hierbei wird eine direkte Verbindung der Abtriebswelle 3 mit der dritten Welle des ersten Summierungsplanetengetriebes 4, dem Steg 7, hergestellt. Das zweite Summierungsplanetengetriebe 5 ist innerhalb des zweiten Schaltbereichs voll entlastet. Ist die zweite Hydrostateinheit B als Verstelleinheit ausgebildet, kann der zweite Bereich durch Sekundärregelung zugunsten eines größeren Overdrivebereiches erweitert werden. Der erweiterte Sekundärregelbereich ist in Figur 2 durch die unterbrochene Linie Bs dargestellt. Für den Rückwärtsfahrbereich kann ebenfalls die Sekundärregelung der Hydrostateinheit B dienen. Der aus der Hydrostateinheit A und der Hydrostateinheit B bestehende Hydrostat wird nun wieder auf Null und darüberhinaus bis am Ende des zweiten Schaltbereichs alle Glieder des ersten Summierungsplanetengetriebes 4 Gleichlauf erreicht haben zurückgeregelt.

Der beschriebene Funktionsablauf innerhalb des ersten und zweiten Fahrbereichs ist bei den übrigen Ausführungsbeispielen gleichartig. Bei den Ausführungsbeispielen mit drei Rückwärtsfahrbereichen, z.B. nach Figur 9 mit Drehzahlplan gemäß Figur 10, erfolgt die Umschaltung in den dritten Fahrbereich bei Synchronlauf aller Glieder des ersten Summierungsplanetengetriebes 30 bei gleichzeitigem Gleichlauf aller Glieder der beiden Kupplungen 11 und 35. Im dritten Fahrbereich wird der Hydrostat nun nochmals voll innerhalb seines vollständigen positiven und negativen Verstellbereichs durchfahren.

Zum Starten des Motors ist die erste Hydrostateinheit A auf ein Fordervolumen "Null" durch z.B. eine mechanische Federzentrierung, wie sie bei einfachen Hydrostatantrieben bekannt ist, eingestellt, um vor allem im kalten Zustand die Motorstartwiderstände durch die Strömungswiderstände im Hydrostatkreislauf zu vermeiden.

Zur Verbesserung des Getriebewirkungsgrades bzw. zur Vermeidung unnötiger Betriebsverluste wird der Öldruck zum Schließen der Bereichskupplungen und zur Versorgung des Hydrostatkreislaufes u.a. entsprechend den jeweiligen Lastzuständen, wie an sich bekannt, angepaßt, durch lastabhängige Modulation z.B. über den Hochdruck des Hydrostatgetriebes.

Ein weiterer Vorteil besteht darin, daß die Verstellgeschwindigkeit des Getriebes den jeweiligen Betriebsbedingungen angepaßt werden kann, durch entsprechende lastabhängige Regelung z.B. durch ein regelbares Drosselventil zur Dosierung der Ölmenge eines Verstellzylinders über den Hochdruck des Hydrostatgetriebes. Die Bereichsschaltungen sind nahezu nahtlos, da diese im Synchronlauf der Kupplungselemente vollzogen werden und, wie an sich bekannt, eine Lastüberschneidung haben, wobei kurzzeitig beide Kupplungen geschlossen sind.

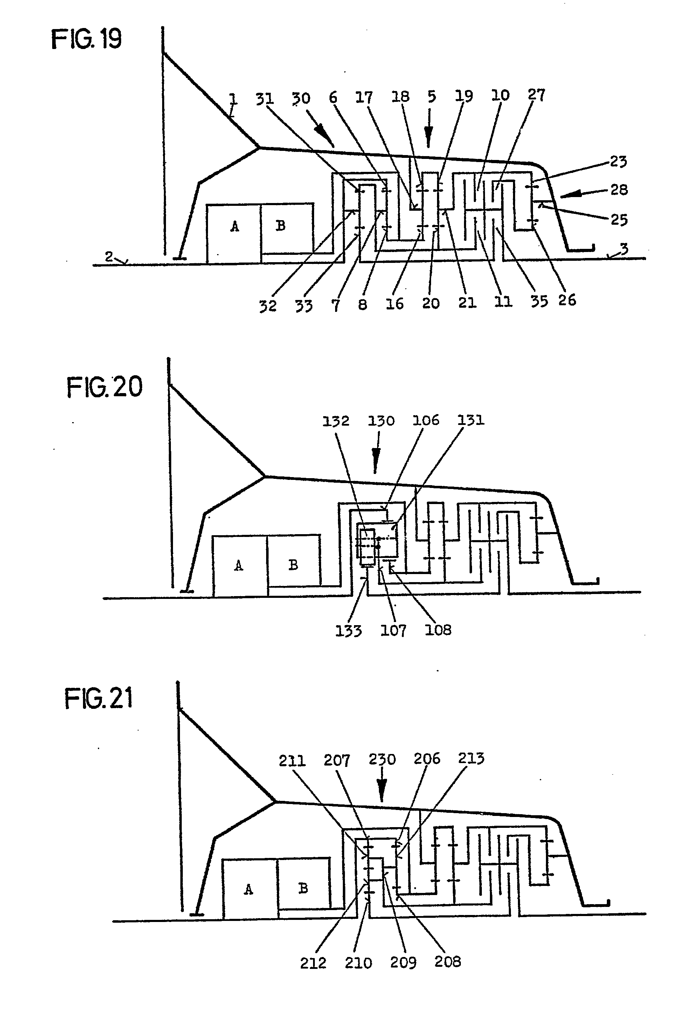

Ein anderes Ausführungsbeispiel des Verzweigungsgetriebes (Fig. 19) zeichnet sich durch eine besonders kompakte Bauweise aus. Die mit höherem Drehmoment belastete Bereichskupplung 10 für den ersten Vorwärtsfahrbereich und die ebenfalls mit höherem Drehmoment belastete Bereichskupplung 27 für den Rückwärtsfahrbereich sind über die beiden weniger drehmomentbelasteten Kupplungen 11, 35 des zweiten Fahrbereichs und des dritten Fahrbereichs angeordnet. Hierdurch kann das gesamte Kupplungspaket auf kurze Bauweise gebracht werden.

Ein weiterer Vorteil besteht darin, daß die Ölzuführungen für alle Bereichskupplungen 10, 11, 35, 27 unmittelbar über die zur Abtriebswelle 3 führende Welle erfolgen kann. Alle Kupplungen haben ein gemeinsames Kupplungsglied, über das auf kostengünstigem Weg die unmittelbare Ölzuführung zu den Kupplungen untergebracht werden kann. Das Wendeplanetengetriebe 28 ist abtriebsseitig nach dem Kupplungspaket angeordnet, wobei dessen Hohlrad 23 mit dem Steg 21 der zweiten Summierungsplanetengetriebeeinheit 5 und einem Kupplungsglied der ersten Bereichskupplung 10 verbunden ist. Der Steg 25 der Wendeplanetengetriebestufe 28 ist gehäusefest, und das Sonnenrad 26 mit einem Glied der Kupplung 27 des Rückwärtsfahrbereichs verbunden.

Das erste Summierungsplanetengetriebe 130, 230, 330 kann, wie in den Figuren 20, 21, 22 dargestellt, verschieden ausgeführt werden. Das Summierungsplanetengetriebe 130 (Fig. 20) besitzt zwei ineinandergreifende erste Planetenräder 131 und zweite Planetenräder 132, die gemeinsam auf einem Steg 107 gelagert sind. Die erste Welle des Summierungsplanetengetriebes 130 ist mit dem Hohlrad 106, das in erste Planetenräder 131 eingreift, die zweite Welle mit dem Sonnenrad 108, das ebenfalls in erste Planetenräder 131 eingreift, und die vierte Welle mit dem Sonnenrad 133, das mit zweiten Planetenrädern 132 kämmt, verbunden. Die dritte Welle bildet den Steg für die Planetenräder 131, 312.

Das Summierungsplanetengetriebe (Fig. 21) besteht aus einer ersten Planetenstufe mit dem Sonnenrad 208, den Planetenrädern 213 und dem Hohlrad 206 sowie einer zweiten Planetengetriebestufe mit dem Sonnenrad 210 aus ineinandergreifenden Planetenrädern 211, 212 und dem Hohlrad 207. Die erste Welle des Summierungsplanetengetriebe 230 ist mit dem Hohlrad 206 der ersten Planetengetriebestufe und dem Hohlrad 207 der zweiten Planetengetriebestufe verbunden. Die zweite Welle mit dem Sonnenrad 208 der ersten Planetengetriebestufe und die dritte Welle stellen den Steg 209 für beide Planetengetriebestufen dar. Die vierte Welle des Summierungsplanetengetriebes wird über das Sonnenrad 210 angetrieben.

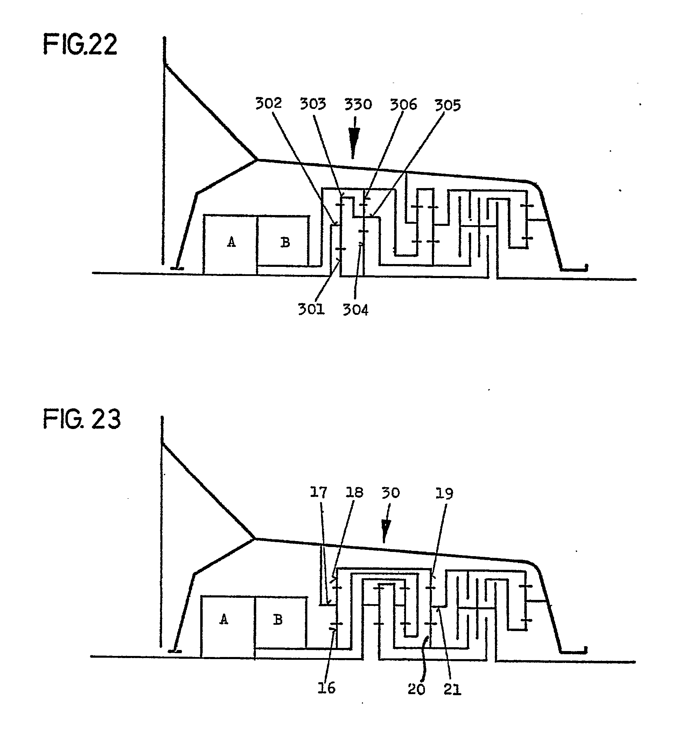

Das Summierungsplanetengetriebe 330 (Fig. 22) besteht ebenfalls aus einer ersten Planetengetriebestufe mit dem Sonnenrad 301, dem Steg 302 und dem Hohlrad 303 sowie einer zweiten Planetengetriebestufe mit dem Sonnenrad 304, dem Steg 305 und dem Hohlrad 306. Die erste Welle des Summierungsplanetengetriebes 330 bildet den Steg 302 der ersten Planetengetriebestufe, die zweite Welle das Hohlrad 306 der zweiten Planetengetriebestufe. Die dritte Welle ist mit dem Hohlrad 303 der ersten Planetengetriebestufe und dem Steg 305 der zweiten Planetengetriebestufe verbunden, und die vierte Welle des Summierungsplanetengetriebe mit dem Sonnenrad 301 der ersten Planetengetriebestufe sowie mit dem Sonnenrad 304 der zweiten Planetengetriebestufe.

Die verschiedenen Ausführungen der Summierungsplanetengetriebe 130, 230, 330 sind Alternativlösungen zur Ausführung des Summierungsplanetengetriebes 30. Je nach jeweiligen spezifischen Forderungen bei Ausstattung verschiedener Fahrzeuge ist eine gezielte Auswahlmöglichkeit gegeben.

Zur Verbesserung des Getriebewirkungsgrades werden - wie an sich bekannt - die Hydrostatkomponenten im ölleeren Gehäuse betrieben. Die Einspeise- und Spülventile sind hierbei - wie ebenfalls bekannt - so ausgebildet, daß das nicht für den Lecköausgleich benötigte Öl, was insbesondere zur Spülung und Kühlung der Hydrostatanlage dient, nicht in das Hydrostatgehäuse abgespritzt wird, sondern, falls erforderlich, weiteren Verbrauchern, wie Bereichskupplungen, Schmiereinrichtungen etc., zugeführt, und der Rest vorzugsweise über den Ölkühler geführt werden kann. Zu diesem Zweck werden vorzugsweise zwei beidseitig angeordnete Wechselventile verwendet, wie sie prinzipiell allgemein als Einspeiseventil für Hydrostatik bekannt sind, wobei das eine für die Einspeisung, und das andere Ventil den Niederdruckdurchfluß nach der Hydrostatspülung und -kühlung zu den genannten Nebenverbrauchern und gegebenenfalls zum Kühler freigibt. Beide Ventile werden - wie bei Einspeise- und Spülventilen allgemein bekannt - durch den jeweiligen Hochdruck angesteuert, wodurch der Weg zur Hochdruckseite verschlossen und gleichzeitig der beidseitige Öldurchgang unter Niederdruck freigegeben wird.

Anstelle des Bypaßventils 55 (Fig. 7) kann für den Anfahrvorgang auch die erste Bereichskupplung 10 bzw. Rückwärtsbereichskupplung 22; 22a; 27 als Anfahrkupplung benutzt werden, die bei entsprechender Ausbildung die Drehzahlspreizung (Fig. 7, siehe Linie 37) und den ersten Anfahrbereich bis Übersetzungspunkt "X" überbrückt. Die als Anfahrkupplung dienende Bereichskupplung kann mit gleichen Signalen, wie das Bypaßventil 55 angesteuert werden.

## Patentansprüche

1. Stufenloses hydrostatisch-mechanisches Verzweigungsgetriebe für Kraftfahrzeuge, mit wenigstens zwei Planetengetriebeeinheiten (4, 5; 30, 5; 130, 5; 230, 5; 330, 5) und mindestens zwei hydrostatisch-mechanischen Fahrbereichen, bei dem alle Vorwärtsfahrbereiche mit Leistungsverzweigung arbeiten, und die eingangsseitig in einen hydraulischen und einen mechanischen Leistungszweig aufgeteilte Leistung in einem Summierungsplanetengetriebe wieder aufsummiert wird, wobei die erste Welle (51) des Summierungsplanetengetriebes (4, 5; 30, 5; 130, 5; 230, 5; 330, 5) ständig mit einer ersten Hydrostateinheit (A) verstellbaren Volumens in Triebverbindung steht, und eine zweite Hydrostateinheit (B) mit einer zweiten Welle (52) des Summierungsplanetengetriebes ständig verbunden ist, dadurch gekennzeichnet, daß

(a) das Summierungsplanetengetriebe aus mindestens fünf Wellen besteht,

(b) das Summierungsplanetengetriebe (4, 5; 30, 5; 130, 5; 230, 5; 330, 5) aus einer ersten Summierungsplanetengetriebeeinheit (4; 30; 130; 230; 330) und einer zweiten wenigstens vierwellig ausgebildeten Summierungsplanetengetriebeeinheit (5) besteht, und beide Summierungsplanetengetriebeeinheiten über wenigstens zwei Wellen (53, 54) ständig miteinander verbunden sind,

(c) die zweite Hydrostateinheit (B) mit der ersten Summierungsplanetengetriebeeinheit (4; 30; 130;

230; 330) und der zweiten Summierungsplanetengetriebeeinheit (5) ständig verbunden ist,

(d) im ersten Vorwärtsfahrbereich die erste Welle (51; 6; 106; 206; 302) der ersten Summierungsplanetengetriebeeinheit (4; 30; 130; 230; 330) und die zweite mit der zweiten Hydrostateinheit (B) verbundene Welle (52; 8, 16; 108, 16; 208, 16; 306) des Summierungsplanetengetriebes (4, 5; 30, 5; 130, 5; 230, 5; 330, 5; 30, 16, 17, 18, 19, 20, 21) im Anfahrzustand gleichsinnige Drehrichtungen bzw. am Ende des ersten Vorwärtsfahrbereichs gegensinnige Drehrichtungen aufweisen.

2. Verzweigungsgetriebe nach Anspruch 1, dadurch gekennzeichnet, daß die erste Summierungsplanetengetriebeeinheit (4) dreiwellig bzw. die erste Summierungsplanetengetriebeeinheit (30; 130; 230; 330) vierwellig ausgebildet ist.

3. Verzweigungsgetriebe nach Anspruch 1, dadurch gekennzeichnet, daß die zweite Hydrostateinheit (B) zur Schaffung eines Rückwärtsfahrbereichs und zur Erweiterung des zweiten Vorwärtsfahrbereichs als Verstelleinheit mit Drehzahlerhöhung (Bs) ausgebildet ist (Fig. 2).

4. Verzweigungsgetriebe nach Anspruch 1, dadurch gekennzeichnet, daß ein Glied (Hohlräder 18, 19) der zweiten Summierungsplanetengetriebeeinheit (5) mit der Abtriebswelle (3) über eine Kupplung (12) so verbindbar ist, daß ein rein hydrostatischer Rückwärtsfahrbereich schaltbar ist (Fig. 11).

5. Verzweigungsgetriebe nach einem der Ansprüche 1 oder 2, dadurch gekennzeichnet, daß ein Planetengetriebe (28) vorgesehen ist, das über ein Glied (26; 23) mit einem Steg (21) der zweiten Summierungsplanetengetriebeeinheit (5) verbunden bzw. verbindbar ist, der über eine Kupplung (27) bzw. Bremse (22) mit der Abtriebswelle (3) in Triebverbindung bringbar ist (Fig. 6, 19).

6. Verzweigungsgetriebe nach Anspruch 1, dadurch gekennzeichnet, daß die beiden Summierungsplanetengetriebeeinheiten (4, 5 bzw. 30, 5) so ausgelegt sind, daß eine Drehzahlspreizung (37) der zweiten Hydrostateinheit (B) möglich ist und ein Bypaßventil (55) mit Ansteuerung durch ein Signal (36) eingebaut ist (Fig. 6, 7).

7. Verzweigungsgetriebe nach Anspruch 1, dadurch gekennzeichnet, daß die erste Hydrostateinheit (A), die zweite Hydrostateinheit (B), die erste Summierungs-Planetengetriebeeinheit (4; 30; 130; 230; 330), die zweite Summierungs-Planetengetriebeeinheit (5) und die Kupplungen (10, 11; 11, 12, 13; 22; 27) koaxial zueinander angeordnet sind.

8. Verzweigungsgetriebe nach Anspruch 1, dadurch gekennzeichnet, daß das Hydrostatpaket (erste Hydrostateinheit A, zweite Hydrostateinheit B), die erste Summierungs-Planetengetriebeeinheit (4; 30; 130; 230; 330), die zweite Summierungs-Planetengetriebeeinheit (5), ein Planetengetriebe (28) und Kupplungen (9; 9a) für kurze und fahrzeuggerechte Querbauweise in einem frontangetriebenen PKW parallel zueinander versetzt angeordnet sind.

9. Verzweigungsgetriebe nach Anspruch 1, dadurch gekennzeichnet, daß die Hydrostateinheiten (A, B) parallel zur Antriebswelle (40) versetzt angeordnet sind, und die Antriebswelle (4) mit der ersten Summierungs-Planetengetriebeeinheit (4 bzw. 30) unmittelbar verbunden ist (Fig. 16, 17, 18).

10. Verzweigungsgetriebe nach Anspruch 1, dadurch gekennzeichnet, daß das Getriebe mit einem Planetenwendegetriebe (44), einer Kupplung (38) und einer Kupplung bzw. Bremse (45) ausgestattet ist (Fig. 18).

11. Verzweigungsgetriebe nach Anspruch 1, dadurch gekennzeichnet, daß die Summierungs-Planetengetriebeeinheiten (4; 30; 5) so ausgelegt sind, daß die erste Hydrostateinheit (A) im ersten Fahrbereich bei geschlossener Kupplung (10, 10a) eine Zwischenstellung zwischen Null und Maximalverstellung hat, also nicht auf volle Verstellgröße ausgestellt ist, und die Abtriebswelle beim Verstellen in Richtung Endverstellung negative Drehzahl für Rückwärtsfahrt erhält.

12. Verzweigungsgetriebe nach einem oder mehreren der Ansprüche 1 bis 11, dadurch gekennzeichnet, daß die Verzweigungsgetriebekomponenten, nämlich erste Summierungs-Planetengetriebeeinheit (4; 30; 130; 230; 330), zweite Summierungs-Plattengetriebeeinheit (5), Planetengetriebe (28), Kupplungen (109), und Wendegetriebeteil (Bremse 45, Planetenwendegetriebe 44), eine Montageeinheit bilden (Fig. 16, 17, 18).

13. Verzweigungsgetriebe nach Anspruch 1, dadurch gekennzeichnet, daß die Abtriebswelle (3) mit dem Steg (21) der zweiten Summierungs-Planetengetriebeeinheit (5) verbunden ist, und ein Steg (17a) des zweiten Summierungsplanetengetriebes (5) über eine Bremse (10a) mit einem Gehäuse (1) des Getriebes verbindbar ist (Fig. 1a).

14. Verzweigungsgetriebe nach einem der Ansprüche 1 und 6, dadurch gekennzeichnet, daß das Bypaßventil (55) durch das Signal (36) aus der Bremseinrichtung oder/und der Motordrehzahl oder/und einer lastabhängigen Größe (Hydrostatdruck) angesteuert wird.

15. Verzweigungsgetriebe nach einem der Ansprüche 1 bis 14, dadurch gekennzeichnet, daß Antriebsmotor und Getriebe derart zu einem Antriebsblock kombiniert sind, daß An- und Abtrieb auf der gleichen Getriebeseite liegen, nämlich der Antriebsmotor am rechten Antriebsanschluß (43) angeschlossen ist, und die ebenfalls rechtsseitige Abtriebswelle (41) in an sich bekannter Weise mit einem Winkelgetriebe versehen ist, so daß ein möglichst rechtwinkliger Abtrieb in Flanschnähe des Antriebsmotors geschaffen wird, um lagegünstig in das Differential der Triebachse des Fahrzeugs mit querliegendem Motor eintreiben zu können (Fig. 16, 17, 18).

16. Verzweigungsgetriebe nach einem oder mehreren der Ansprüche 1 bis 15, dadurch gekennzeichnet, daß die Kupplungen (10, 27) für den ersten Fahrbereich und den Rückwärtsfahrbereich über den Kupplungen (11, 35) für den zweiten und dritten Fahrbereich angeordnet sind (Fig. 19).

17. Verzweigungsgetriebe nach einem oder mehreren der Ansprüche 1 bis 16, dadurch gekennzeichnet, daß alle Bereichskupplungen (10, 11, 35, 27) ein gemeinsames abtriebsseitiges Kupplungsglied besitzen.

18. Verzweigungsgetriebe nach einem oder mehreren der Ansprüche 1 bis 17, dadurch gekennzeichnet, daß die Bereichskupplungen (10, 11, 35, 27) zwischen der zweiten Summierungs-Planetengetriebeeinheit (5) und dem Wendeplanetengetriebe (28) angeordnet sind.

19. Verzweigungsgetriebe nach einem der Ansprüche 1 bis 18, dadurch gekennzeichnet, daß die zweite Summierungs-Planetengetriebeeinheit (5) aus zwei Planetengetriebestufen (16, 17, 18; 19, 20, 21) mit je einem Sonnerad (16; 20), je einem Hohlrad (18; 19) und je einer Stegwelle (17; 21) besteht, wobei eine Stegwelle (17) gehäusefest oder mit dem Gehäuse (1; 46) verbindbar ist, und die Stegwelle (21) der anderen Planetengetriebestufe das abtreibende Glied für den ersten Vorwärtsfahrbereich bildet.

20. Verzweigungsgetriebe nach einem oder mehreren der Ansprüche 1 bis 18, dadurch gekennzeichnet, daß der Steg (21) der zweiten Summierungs-Planetengetriebeeinheit (5) mit einem Glied der ersten Bereichskupplung (10) und mit dem Hohlrad (23) des Wendeplanetengetriebes (28) verbunden ist, und das Sonnenrad (26) des Wendeplanetengetriebes (28) mit einem Glied der Kupplung (27) für den Rückwärtsfahrbereich in Verbindung steht.

21. Verzweigungsgetriebe nach einem oder mehreren der Ansprüche 1 bis 29, dadurch gekennzeichnet, daß die erste Summierungs-Planetengetriebeeinheit (30) aus zwei Planetengetriebestufen besteht, wobei die erste Planetengetriebestufe durch ein Sonnenrad (8), einen Steg (7) und ein Hohlrad (6) gebildet ist, und die zweite Planetengetriebestufe ein Sonnenrad (33), einen Steg (32) und ein Hohlrad (31) umfaßt, daß die erste Welle (51) des Summierungs-Planetengetriebes mit dem Steg (32) der zweiten Planetengetriebestufe, die zweite Welle (52) des Summierungs-Planetengetriebes mit dem Sonnenrad (8) der ersten Planetengetriebestufe verbunden ist, und daß der Steg (7) der ersten Planetengetriebestufe mit der fünften Welle (54) des Summierungs-Planetengetriebes und dem Hohlrad (31) der zweiten Planetengetriebestufe in Triebverbindung steht, und daß das Sonnenrad (33) der zweiten Planetengetriebestufe als sechste Welle (34) des Summierungs-Planetengetriebes mit einer Kupplung (35) mit der Abtriebswelle (3) verbindbar ist.

22. Verzweigungsgetriebe nach einem oder mehreren der Ansprüche 1 bis 21, dadurch gekennzeichnet, daß die erste Summierungs-Planetengetriebeeinheit (130) mit ineinandergreifenden ersten Planetenrädern (131) und zweiten Planetenrädern (132) ausgerüstet ist, die auf einem Steg (107) gelagert sind, wobei die erste Welle des Summierungs-Planetengetriebes über ein Hohlrad (106) in erste Planetenräder (131), die zweite Welle des Summierungs-Planetengetriebes über ein Sonnenrad (108) in erste Planetenräder (131) und die vierte Welle des Summierungs-Planetengetriebes über ein Sonnenrad (133) in zweite Planetenräder (132) eingreifen (Fig. 20).

23. Verzweigungsgetriebe nach Anspruch 1, dadurch gekennzeichnet, daß die erste Summierungs-Planetengetriebeeinheit (230) aus zwei Planetengetriebestufen gebildet ist, wobei die erste Planetengetriebestufe aus dem Sonnenrad (208), dem Hohlrad (206) und den Planetenrädern (213) besteht, und die zweite Planetengetriebestufe aus dem Sonnenrad (210) und ineinandergreifenden Planetenrädern (211, 212) sowie einem Hohlrad (207) besteht, wobei die erste Welle des Summierungs-Planetengetriebes mit den beiden Hohlrädern (206, 207) der beiden Planetengetriebestufen verbunden ist, und die zweite Welle des Summierungs-Planetengetriebes über ein Sonnenrad (208) der ersten Planetengetriebestufe in Verbindung steht, die dritte Welle den Steg (209) aller Planetenräder (213, 211, 212) beider Planetengetriebestufen bildet, und die vierte Welle des Summierungs-Planetengetriebes über das Sonnenrad (210) angetrieben wird (Fig. 21).

24. Verzweigungsgetriebe nach Anspruch 1, dadurch gekennzeichnet, daß die erste Summierungs-Planetengetriebeeinheit (330) mit einer ersten Planetengetriebestufe (301, 302, 303) und einer zweiten Planetengetriebestufe (304, 305, 306) aufgebaut ist, und die erste Welle des Summierungs-Planetengetriebes mit dem Steg (302) der ersten Planetengetriebestufe, die zweite Welle des Summierungs-Planetengetriebes mit dem Hohlrad (306) der zweiten Planetengetriebestufe, die dritte Welle des Summierungs-Planetengetriebes mit dem Hohlrad (303) der ersten Planetengetriebestufe und dem Steg (305) der zweiten Planetengetriebestufe, und die vierte Welle des Summierungs-Planetengetriebes mit den Sonnenrädern (301, 304) beider Planetengetriebestufen verbunden sind (Fig. 22).

25. Verzweigungsgetriebe nach Anspruch 1, dadurch gekennzeichnet, daß die erste Bereichskupplung (10) und die Kupplung (22; 22a; 27) für den Rückwärtsfahrbereich alternativ als Anfahrkupplungen dienen.

26. Verzweigungsgetriebe nach einem oder mehreren der Ansprüche 1 bis 25, dadurch gekennzeichnet, daß die erste Planetengetriebestufe (16, 17, 18) der zweiten Summierungs-Planetengetriebeeinheit (5) unmittelbar nach der zweiten Hydrostateinheit (B) angeordnet ist, und die zweite Planetengetriebestufe (19, 20, 21) der zweiten Summierungs-Planetengetriebeeinheit (5) nach der ersten Summierungs-Planetengetriebeeinheit (4; 30; 130; 230; 330) angeordnet ist, und die Hohlräder (18, 19) der zweiten Summierungs-Planetengetriebeeinheit (5) in die erste Summierungs-Planetengetriebeeinheit (30) übergreifen.

## Claims

1. Continuous hydrostatic-mechanical power-dividing transmission for motor vehicles, comprising at least two planetary gear units (4, 5; 20, 5; 130, 5; 230, 5; 330, 5) and at least two hydrostatic-mechanical gear ranges, wherein all forward gear ranges operate on power division and the power divided at the input side into a hydraulic and a mechanical power branch is compounded again in a compounding planetary gear, the first shaft (51) of the compounding planetary gear (4, 5; 30, 5; 130, 5; 230, 5; 330, 5) being in permanent operative connection with a first hydrostatic unit (A) of adjustable volume, and a second hydrostatic unit (B) being permanently connected to a second shaft (52) of said compounding planetary gear, characterized in that

(a) the compounding planetary gear consists of at least five shafts,

(b) that said compounding planetary gear (4, 5; 130, 5; 230, 5; 330, 5) consists fo a first compounding planetary gear unit (4; 30; 130; 230; 330) and a second compounding planetary gear unit of at least four-shaft design, with both compounding planetary gear units being permanently interconnected through at least two shafts (53, 54),

(c) that the second hydrostatic unit (B) is permanently connected to said first compounding planetary gear unit (4; 30; 130; 230; 330) and said compounding planetary gear unit (5),

(d) that in the first advance gear range, the first shaft (51; 6; 106; 206; 302) of said first compounding planetary gear unit (4; 30; 130; 230; 330) and the second shaft (52; 8, 16; 108, 16; 208, 16; 306) of said compounding planetary gear (4, 5; 30, 5; 130, 5; 230, 5; 330, 5), which is connected to said second hydrostatic unit (B), present the same direction of rotation in the starting condition and/or an opposite sense of rotation at the end of the first advance gear range.

2. Power-dividing transmission according to Claim 1, characterized in that said first compounding planetary gear unit (4) is of a three-shaft design or that the first compounding planetary gear unit (30; 130; 230; 330) is a four-shaft design.

3. Power-dividing transmission according to Claim 1, characterized in that said second hydrostatic unit (B) is configured as an adjusting unit with speed multiplication (Bs) so as to create a reverse-driving range and to expand the second advance gear range (Fig. 2).

4. ·Power-dividing transmission according to Claim 1, characterized in that a member (hollow wheels 18, 19) of said second compounding planetary gear unit (5) may be so connected to the output shaft (3) through a clutch (12) that a purely hydrostatic reverse-driving range may be selected (Fig. 11).

5. Power-dividing transmission according to any of Claims 1 or 2, characterized in that a planetary gear (28) provided which is or may be connected to a carrier (21) of said second compounding planetary gear unig (5) through an element (26; 23), which carrier may be operatively connected to the output shaft (3) through a clutch (27) or brake (22) (Figs. 6, 19).

6. Power-dividing transmission according to Claim 1, characterized in that the two compounding planetary gear units (43, 5 or 30, 5, respectively) are so designed that speed spreading (37) of the second hydrostatic unit (B) will be possible, and that a by-pass valve (55) is installed for being controlled by a signal (36) (Figs. 6, 7).

7. Power-dividing transmission according to Claim 1, characterized in that the first hydrostatic unit (A), the second hydrostatic unit (B), the first compounding planetary gear (4; 30; 130; 230; 330), the second compounding planetary gear unit (5), and the clutches (10, 11; 11, 12, 13; 22; 27) are disposed in mutual coaxial relationship.

8. Power-dividing transmission according to Claim 1, characterized in that said hydrostat package (first hydrostatic unit A, second hydrostatic unit B), the first compounding planetary gear unit (4; 30; 130; 230; 330), the second compounding planetary gear unit (5), a planetary gear (28) and clutches (9; 9a) are disposed in mutual parallel offset relationship so as to provide for a short vehicle-compatible transverse design for installation in a front-drive passenger car.

9. Power-dividing transmission according to Claim 1, characterized in that said hydrostatic units (A, B) are offset in parallel to the input shaft (40), and that the input shaft (40) is directly connected to the first compounding planetary gear unit (4 or 30, respectively) (Figs. 16, 17, 18).

10. Power-dividing transmission according to Claim 1, characterized in that the transmission is equipped with a reversing planetary gear (44), a clutch (38), and a clutch or brake (45) (Fig. 18).

11. Power-dividing transmission according to Claim 1, characterized in that said compounding planetary gear units (4; 30; 5) are so designed that the first hydrostatic unit (A) takes an intermediate position between zero and the maximum position of adjustment in the first gear range when the clutch (10, 10a) is closed, which means that it is not set to the extreme adjustment position, and that the output shaft receives a negative revolution for reverse drive during adjustment towards the maximum position.

12. Power-dividing transmission according to any or several of Claims 1 to 11, characterized in that the power-dividing transmission elements, i.e. the first compounding planetary gear unit (4; 30; 130; 230; 330), the second compounding planetary gear unit 85), the planetary gear (28), the clutches (109), and the reversing gear unit (brake 45, reversing planetary gear 44) constitute a single assembly block (Figs. 16, 17, 18).

13. Power-dividing transmission according to Claim 1, characterized in that the output shaft (3) is connected to the carrier (21) of said second compounding planetary gear unit (5), and that a carrier (17a) of said second compounding planetary gear (5) may be connected to a housing (1) of the transmission through a brake (10a) (Fig. 1a).

14. Power-dividing transmission according to any of Claims 1 and 6, characterized in that said by-pass valve (55) is controlled by the signal (36) from said brake means or/and the engine speed or/and a load-dependent parameter (hydrostatic pressure).

15. Power-dividing transmission according to any of Claims 1 to 14, characterized in that the driving engine and the transmission are so combined to form one drive block that the input and the output are located at the same side of the transmission, specifically that the drive engine is connected to the right-hand drive connector (43) and the output shaft (41), which is also provided on the right-hand side, is provided, in a manner known per se, with a miter gear so that an output in the proximity of the engine flange will be created which is orthogonal as far as possible, so as to provide an opportunity of intervention in the differential of the driving axle of the vehicle with a transversely installed engine at an expedient position (Figs. 16, 17, 18).

16. Power-dividing transmission according to any or several of Claims 1 to 15, characterized in that the clutches (10, 27) for the first driving range and the reverse-driving range are disposed above the clutches (11, 35) for the second and third gear ranges (Fig. 19).

17. Power-dividing transmission according to any or several of Claims 1 to 16, characterized in that all range clutches (10, 11, 35, 27) share one clutch element at the output side in common.

18. Power-dividing transmission according to any or several of Claims 1 to 17, characterized in that the range clutches (10, 11, 35, 27) are disposed between said second compounding planetary gear unit (5) and said reversing planetary gear (28).

19. Power-dividing transmission according to any of Claims 1 to 18, characterized in that the second compounding planetary gear unit (5) is composed of two planetary gear stages (16, 17, 18; 19, 20, 21) each having one sun wheel (16; 20), one hollow wheel (18; 19) and one carrier shaft (17; 21), with one of said carrier shafts (17) being provided for fixed attachment to the casing or the housing (1; 46) while the carrier shaft (21) of the other planetary gear stage constitutes the output element for the first advance gear range.

20. Power-dividing transmission according to any or several of Claims 1 to 18, characterized in that said carrier (21) of said second compounding planetary gear unit (5) is connected to an element of said first range clutch (10) and the hollow wheel (23) of said reversing planetary gear (28), and that the sun wheel (26) of said reversing planetary gear (28) is connected to one member of clutch (27) for the reverse gear range.

21. Power-dividing transmission according to any or several of Claims 1 to 20, characterized in that said first compounding planetary gear unit (30) is composed of two planetary gear stages whereof the first one is constituted by a sun wheel (8), a carrier (7) and a hollow wheel (6), while the other one includes a sun wheel (33), a carrier (32) and a hollow wheel (31), and in that said first shaft (51) of said compounding planetary gear is connectet to carrier (32) of said second planetary gear stage, that the second shaft (52) of said compounding planetary gear is connected to the sun wheel (8) of said first planetary gear stage, and in that said carrier (7) of said first planetary gear stage is operatively connected to the fifth shaft (54) of said compounding planetary gear and the hollow wheel (31) of said second planetary gear stage, and in that finally the sun wheel (33) of said second planetary gear stage as the sixth shaft (34) of said compounding planetary gear drive is provided for connection to the output shaft (3) by means of a clutch (35).

22. Power-dividing transmission according to any or several of Claims 1 to 21, characterized in that the first compounding planetary gear unit (130) is equipped with engaged first planetary pinions (131) and second planetary pinions (132) supported on a carrier (107), wherein the first shaft of said compounding planetary gear is engaged in first planetary pinions (131) through a hollow wheel (106); the second shaft of said compounding planetary gear is engaged in first planetary pinions (131) through a sun wheel (108), and the fourth shaft of said compounding planetary gear is intermeshing with second planetary pinions (132) through a sun wheel (133) (Fig. 20).

23. Power-dividing transmission according to Claim 1, characterized in that the first compounding planetary gear unit (230) is composed of two planetary gear stages whereof the first one consists of the sun wheel (208), the hollow wheel (206) and the planetary pinions (213) while the second planetary gear stage consists of the sun wheel (210) and intermeshing planetary pinions (211, 212) as well as a hollow wheel (207), with the first shaft of said compounding planetary gear being connected to the two hollow wheels (206, 207) of the two planetary gear stages and the second shaft of said compounding planetary gear being connected through a sun wheel (208) of said first planetary gear stage, while the third shaft constitutes the carrier (209) for all planetary pinions (213, 211, 212) of both planetary gear stages, and the fourth shaft of said compounding planetary gear is driven through said sun wheel (210) (Fig. 21).

24. Power-dividing transmission according to Claim 1, characterized in that the first compounding planetary gear unit (330) is constituted by a first planetary gear stage (301, 302, 303) and a second planetary gear stage (304, 305, 306), and that the first shaft of said compounding planetary gear is connected to the carrier (302) of the first gear stage, that the second shaft of the compounding planetary gear stage is connected to the hollow wheel (306) of the secondary planetary gear stage, that the third shaft of the compounding planetary gear is connected to the hollow wheel (303) of the first planetary gear stage and the carrier (305) of the second planetary gear stage, and the fourth shaft of the compounding planetary gear is connected to the sun wheels (301, 304) of both planetary gear stages (Fig. 22).

25. Power-dividing transmission according to Claim 1, characterized in that the first range clutch (10) and the clutch (22; 22a; 27) for the reverse gear range are provided as starting clutch alternatives.

26. Power-dividing transmission according to any or several of Claims 1 to 25, characterized in that the first planetary gear stage (16, 17, 18) of the second compounding planetary gear unit (5) is disposed immediately after the second hydrostatic unit (B), and that the second planetary gear stage (19, 20, 21) of the second compounding planetary gear unit (5) is disposed after the first compounding planetary gear unit (4; 30; 130; 230; 330), and that the hollow wheels (18, 19) of the second compounding planetary gear unit (5) enclose the first compounding planetary gear unit (30).

## Revendications

1. Transmission hydrostatique-mécanique à réglage progressif et à dérivation de puissance pour des véhicules automobiles, comprenant au moins deux unités engrenage planétaire (4, 5; 30, 5; 130, 5; 230, 56; 330, 5) et au moins deux régimes de vitesses hydrostatiques-mécaniques, dans laquelle tous les régimes de marche en avant fonctionnent à dérivation de puissance, et la puissance divisée à l'entrée dans une branche de puissance hydraulique et une branche de puissance mécanique est intégrée de nouveau, le premier arbre (51) de l'engrenage planétaire intégrant (4, 5; 30, 5; 130, 5; 230, 5; 330, 5) étant en raccord moteur permanent avec une première unité hydrostatique (A) à volume réglable, et une deuxième unité hydrostatique (B) se trouvant en raccord permanent à un deuxième arbre (52) de l'engrenage planétaire intégrant, caractérisée en ce que

(a) ledit engrenage planétaire intégrant se compose d'au moins cinque arbres,

(b) ledit engrenage planétaire intégrant (4, 5; 30, 5; 130, 5; 230, 5; 330, 5) comprend une première unité engrenage planétaire intégrant (4; 30; 130; 230; 330) et une deuxième unité engrenage planétaire intégrant (5) à au moins quatre arbres, et en ce que les deux unités engrenage planétaire intégrant se trouvent en raccord permanent par au moins deux arbres (53, 54);

(c) que ladite deuxième unité hydrostatique (B) se trouve en raccord permanent à ladite première unité engrenage planétaire intégrant (4; 30; 130; 230; 330) et de ladite deuxième unité engrenage planétaire intégrant (5),

(d) qu'au premier régime de marche en avant, le premier arbre (51; 6; 106; 206; 302) de ladite première unité engrenage planétaire intégrant (4; 30; 130; 230; 330) et le deuxième arbre (52; 8, 16; 108, 16; 208, 16; 306) de l'engrenage planétaire intégrant (4, 5; 30, 56; 130, 5; 230, 5; 330, 5; 30, 16, 17, 18, 19, 20, 21), qui est relié à la deuxième unité hydrostatique (B), présentent, en état de démarrage, la même direction de rotation ou, à l'extrême du premier régime de marche avant, des directions de rotation en sens inverse.

2. Transmission à dérivation de puissance selon la Revendication 1, caractérisée en ce que ladite première unité engrenage planétaire intégrant (4) est réalisée à trois arbres ou que la première unité engrenage planétaire intégrant (30; 130; 230; 330) est réalisée à quatre arbres, respectivement.

3. Transmission à dérivation de puissance selon la Revendication 1, caractérisée en ce que la deuxième unité hydrostatique (B) est réalisée sous forme d'une unité de réglage à multiplication de vitesse (Bs) pour créer un régime de marche arrière et pour élargir le deuxième régime de marche en avant (Fig. 2).

4. Transmission à dérivation de puissance selon la Revendication 1, caractérisée en ce qu'un élément (couronnes de train planétaire 18, 19) de la deuxième unité engrenage planétaire intégrant (5) est raccordable à l'arbre de sortie (3) par un embrayage (12) d'une façon qu'un réglage nettement hydrostatique du régime de marche arrière soit réalisable (Fig. 11).

5. Transmission à dérivation de puissance selon quelconque des Revendications 1 ou 2, caractérisée en ce qu'un engrenage planétaire (28) est pourvu qui est raccordé ou raccordable à un porte-pignons (21) de la deuxième unité engrenage planétaire intégrant (5) par un élément (26; 23), ledit porte-pignons étant pourvue pour le raccord moteur à l'arbre de sortie (3) moyennant un embrayage (27) ou frein (22) (Fig. 6, 19).

6. Transmission à dérivation de puissance selon la Revendication 1, caractérisée en ce que les deux unités engrenage planétaire intégrant (4, 5 ou 30, 5) sont configurés afin de permettre une plage des rapports d'engrenages (37) de la deuxième unité hydrostatique (B), et qu'une soupape de dérivation (55) est installée qui est commandée par un signal (36) (Fig. 6, 7).

7. Transmission à dérivation de puissance selon la Revendication 1, caractérisée en ce que ladite première unité hydrostatique (A), ladite deuxième unité hydrostatique (B), ladite première unité engrenage planétaire intégrant (4; 30; 130; 230; 330), ladite deuxième unité engrenage planétaire intégrant (5) et lesdits embrayages (10, 11; 11, 12, 13; 22; 27) sont disposés en relation coaxiale relativement l'un à l'autre.

8. Transmission à dérivation de puissance selon la Revendication 1, caractérisée en ce que ledit ensemble hydrostatique paqueté (première unité hydrostatique A, deuxième unité hydrostatique B), ladite première unité engrenage planétaire intégrant (4; 30; 130; 230; 330), la deuxième unité engrenage planétaire intégrant (5), un engrenage planétaire (28) et des embrayages (9; 9a) sont disposés en déport parallèle l'un relativement à l'autre afin de permettre une courte construction transversale compatible avec le véhicule à installation dans une voiture particulière à traction avant.

9. Transmission à dérivation de puissance selon la Revendication 1, caractérisée en ce que lesdites unités hydrostatiques (A, B) sont disposées en déport parallèle à l'arbre d'entrée (40), et en ce que ledit arbre d'entrée (40) est directement raccordé à ladite première unité engrenage planétaire intégrant (4 ou 30) (Fig. 16, 17, 18).

10. Transmission à dérivation de puissance selon la Revendication 1, caractérisée en ce que la transmission est pourvu d'un système de transmission réversible planétaire (44), d'un embrayage (38) et d'un élément coupleur ou frein (45), respectivement (Fig. 18).

11. Transmission à dérivation de puissance selon la Revendication 1, caractérisée en ce qu'en premier régime de marche à embrayage fermé (10, 10a), lesdites unités engrenage planétaire intégrant (4; 30; 50) sont si configurées que ladite première unité hydrostatique (A) prend une position intermédiaire entre zéro et la position maximale, c.a.d. dans une gamme autre que l'ampleur totale de réglage, et en ce que l'arbre de sortie reçoit un nombre de tours négatif pour la marche arrière en réglage vers la position extrême.

12. Transmission à dérivation de puissance selon une ou plusieurs des Revendications 1 à 11, caractérisée en ce que les composants de la transmission à dérivation, notamment la première unité engrenage planétaire intégrant (4; 30; 130; 230; 330), la deuxième unité engrenage planétaire intégrant (5), l'engrenage planétaire (28), des embrayages (109), et le système de transmission réversible (frein 45, transmission réversible planétaire 44) constituent ensemble un seul bloc de montage (Fig. 16, 17, 18).

13. Transmission à dérivation de puissance selon la Revendication 1, caractérisée en ce que l'arbre de sortie (3) est raccordé au porte-pignons (21) de la deuxième unité engrenage planétaire intégrant (5), et en ce qu'un porte-pignons (17a) du deuxième engrenage planétaire intégrant (5) est raccordable à un carter (1) de la transmission par un frein (10a) (Fig. 1a).

14. Transmission à dérivation de puissance selon quelconque des Revendications 1 et 6, caractérisée en ce que ladite soupape de dérivation (55) est commandée par le signal (36) provenant du dispositif frein ou/et à la base de la vitesse du moteur ou/et moyennant un paramètre dépendant de la charge (pression hydrostatique).

15. Transmission à dérivation de puissance selon quelconque des Revendications 1 à 14, caractérisée en ce que le moteur d'entraînement et la transmission sont si combinés à constituer un bloc d'entraînement que l'entrée et la sortie se trouvent au même côté de la transmission, notamment que le moteur d'entraînement est relié au raccord d'entrée droit (43) et que l'arbre de sortie (41), de même au côté droit, est pourvu d'un engrenage conique, d'une façon connue en soi, afin de créer une sortie aussi rectangulaire que possible à proximité du collet du moteur d'entraînement pour permettre l'intervention en bonne position dans le différentiel de l'arbre primaire du véhicule à moteur transversal (Fig. 16, 17, 18).

16. Transmission à dérivation de puissance selon une ou plusieurs des Revendications 1 à 15, caractérisée en ce que lesdits embrayages (10, 27) pour le premier régime de marche et le régime de marche arrière sont disposés en dessus des embrayages (11, 35) pour les deuxième et troisième régime de vitesses (Fig. 19).

17. Transmission à dérivation de puissance selon une ou plusieurs des Revendications 1 à 16, caractérisée en ce que tous les embrayages en régime (10, 11, 35, 27) comprennent un élément coupleur commun au côté de sortie.

18. Transmission à dérivation de puissance selon une ou plusieurs des Revendications 1 à 17, caractérisée en ce que les embrayages en régime (10, 11, 35, 27) sont disposés entre la deuxième unité engrenage planétaire intégrant (5) et la transmission réversible planétaire (28).

19. Transmission à dérivation de puissance selon quelconque des Revendications 1 à 18, caractérisée en ce que la deuxième unité engrenage planétaire intégrant (5) est composée par deux étages engrenage planétaire (16, 17, 18; 19, 20, 21) chacun à une roue solaire (16; 20), une couronne de train planétaire (18; 19) et à un arbre du porte-pignons (17; 21), un desdits arbres de porte-pignons se étant raccordable solidairement à la boîte ou ledit carter (1; 46), et en ce que l'arbre du porte-pignons de l'autre étage engrenage planétaire constitue l'élément de sortie pour le deuxième régime de marche avant.

20. Transmission à dérivation de puissance selon une ou plusieurs des Revendications 1 à 18, caractérisée en ce que le porte-pignons (21) de la deuxième unité engrenage planétaire intégrant (5) est relié à un élément du premier embrayage en régime (10) et la couronne de train planétaire (23) de la transmission réversible planétaire (28), et en ce que la roue solaire (26) de la transmission planétaire réversible (28) est raccordée à un élément de l'embrayage (27) pour le régime de marche arrière.

21. Transmission à dérivation de puissance selon une ou plusieurs des Revendications 1 à 20, caractérisée en ce que la première unité engrenage planétaire intégrant (30) est composée de deux étages engrenage planétaire dont le premier est formé par une roue solaire (8), un porte-pignons (7) et une couronne de train planétaire (6), pendant que le deuxième étage engrenage planétaire comprend une roue solaire (33), un porte-pignons (32) et une couronne de train planétaire (31), en ce que le premier arbre (51) de l'engrenage planétaire intégrant est relié au porte-pignons (32) du deuxième étage engrenage planétaire, que le deuxième arbre (52) de l'engrenage planétaire intégrant est raccordé à la roue solaire (8) du premier étage engrenage planétaire, et en ce que le porte-pignons (7) du premier étage engrenage planétaire se trouve en raccord moteur avec le cinquième arbre (54) de l'engrenage planétaire intégrant et la couronne de train planétaire (31) du deuxième étage engrenage planétaire, et en ce que la roue solaire (33) du deuxième étage engrenage planétaire est raccordable, en tant que le sixième arbre (34) de l'engrenage planétaire intégrant, par un embrayage (35) à l'arbre de sortie (3).

22. Transmission à dérivation de puissance selon une ou plusieurs des Revendications 1 à 21, caractérisée en ce que la première unité engrenage planétaire intégrant (130) est pourvue de premiers pignons satellites (131) en prise mutuelle et de deuxièmes pignons satellites (132) logés sur un porte-pignons (107), dont le premier arbre de l'engrenage planétaire intégrant s'engrène dans les premiers pignons satellites (131) par une couronne de train planétaire (106), le deuxième arbre de l'engrenage planétaire intégrant est en prise dans les premiers pignons satellites (131) par une roue solaire (108), et le quatrième arbre de l'engrenage planétaire intégrant se trouve en prise dans les deuxièmes pignons satellites (132) par une roue solaire (133).

23. Transmission à dérivation de puissance selon la Revendication 1, caractérisée en ce que la première unité engrenage planétaire intégrant (230) est formée par deux étages engrenage planétaire dont le premier étage est composé d'une roue solaire (208), une couronne de train planétaire (206) et les pignons satellites (213) pendant que le deuxième étage engrenage planétaire est constitué par la roue solaire (210) et des pignons satellites (211, 212) en prise mutuelle ainsi que d'une couronne de train planétaire (207), le premier arbre de l'engrenage planétaire intégrant étant raccordé aux deux couronnes de train planétaire (206, 207) des deux étages engrenage planétaire, et le deuxième arbre de l'engrenage planétaire intégrant étant relié par une roue solaire (208) du premier étage engrenage planétaire, le troisième arbre formant le porte-pignons (209) de tous les pignons satellites (213, 211, 212) des deux étages engrenage planétaire, et le quatrième arbre de l'engrenage planétaire intégrant étant entraîné par la roue solaire (210).

24. Transmission à dérivation de puissance selon la Revendication 1, caractérisée en ce que la première unité engrenage planétaire intégrant (330) est constituée par un premier étage engrenage planétaire (301, 302, 303) à un deuxième étage engrenage planétaire (301, 302, 303) et un deuxième étage engrenage planétaire, et en ce que le premier arbre de l'engrenage planétaire intégrant est relié avec le porte-pignons (302) du premier étage engrenage planétaire, que le deuxième arbre de l'engrenage planétaire intégrant est relié avec la couronne de train planétaire (306) du deuxième étage engrenage planétaire, que le troisième arbre de l'engrenage planétaire intégrant est raccordé à la couronne de train planétaire (303) du premier étage engrenage planétaire et au porte-pignons (305) du deuxième étage engrenage planétaire, et en ce que le quatrième arbre de l'engrenage planétaire intégrant est raccordé aux roues solaires (301, 304) desdits deux étages engrenage planétaire (Fig. 22).

25. Transmission à dérivation de puissance selon la Revendication 1, caractérisée en ce que ledit embraye en premier régime (10) et l'embrayage (22; 22a; 27) pour le régime de marche arrière sont alternativement utilisés en tant qu'un embrayage de démarrage.

26. Transmission à dérivation de puissance selon une ou plusieurs des Revendications 1 à 25, caractérisée en ce que le premier étage engrenage planétaire (16, 17, 18) de ladite deuxième unité engrenage planétaire intégrant (5) est disposée directement en aval de la deuxième unité hydrostatique (B), et en ce que le deuxième étage engrenage planétaire (19, 20, 21) de la deuxième unité engrenage planétaire intégrant (4; 30; 130; 230; 330) est disposé en aval de la première unité engrenage planétaire intégrant (4; 30; 130; 230; 330), et en ce que les couronnes de train planétaire (18, 19) de la deuxième unité engrenage planétaire intégrant (5) chevauche la première unité engrenage planétaire intégrant (30).

FIG.1

FIG.1a

## FIG.2

## FIG. 3

FIG. 4

FIG. 5

FIG. 6

FIG. 7

FIG. 8

FIG.9

FIG.10

FIG.11

FIG. 12

FIG. 13

FIG.14

FIG.15

**FIG. 16**

**FIG. 17**

**FIG. 18**

FIG. 19

FIG. 20

FIG. 21

FIG.22

302    303    330    306    305

301    304

FIG. 23

17    18    30    19

16    20    21